# EUROPEAN PATENT APPLICATION

(11) **EP 4 539 385 A1**
(43) Date of publication of application: **16.04.2025**
(21) Application number: 23203086.6
(22) Date of filing: 11.10.2023
(51) Int. Cl.: H04L 9/00, H04L 9/08, H04Q 11/00

(54) **PASSIVE OPTICAL NETWORKS**

(71) Applicant: Nokia Solutions and Networks Oy, 02610 Espoo (FI)
(72) Inventor: SILLIS, Yannick, 2390 Malle (BE)
(74) Representative: Sayer, Robert David

(57) **Abstract**

Example embodiments relate to passive optical networks (PONs) and in particular to the communicating of registration identifiers associated with peripheral communication units which may be used as part of an activation procedure. For example, one example embodiment comprises an apparatus, which may comprise means for receiving, over a passive optical network and from a peripheral communication unit, a data message which include an encrypted registration identifier associated with the peripheral communication unit and wherein the registration identifier is encrypted using a public key associated with the apparatus. The apparatus may also comprise means for decrypting the data message using a private key associated with the public key to determine the registration identifier associated with the peripheral communication unit.

## Description

### Field

Example embodiments relate to passive optical networks (PONs) and in particular to the communicating of registration identifiers associated with peripheral communication units which may be used as part of an activation procedure.

### Background

A passive optical network (PON) is a fibre-optic telecommunications network that may deliver high-speed access to end-customers. PONs may implement a point-to-multipoint topology, in which a single optical fibre serves multiple endpoints by using unpowered (passive) fibre optic splitters to divide the fibre bandwidth among multiple peripheral communication units which are usually situated in customer premises. PONs may include a central communication unit which may be considered a service provider endpoint for performing conversion between electrical signals and fibre-optic signals and to coordinate multiplexing via the optical splitters of said fibre-optical signals to the peripheral communication units.

### Summary

The scope of protection sought for various embodiments of the invention is set out by the independent claims. The embodiments and features, if any, described in this specification that 15 do not fall under the scope of the independent claims are to be interpreted as examples useful for understanding various embodiments of the invention.

According to a first aspect, there is described an apparatus, comprising: means for receiving, over a passive optical network and from a peripheral communication unit, a data message which include an encrypted registration identifier associated with the peripheral communication unit and wherein the registration identifier is encrypted using a public key associated with the apparatus; and means for decrypting the data message using a private key associated with the public key to determine the registration identifier associated with the peripheral communication unit.

The data message may be received as part of an activation process of the peripheral communication unit. The apparatus may further comprise: means for transmitting the public key to the peripheral communication unit of the passive optical network. The apparatus may further comprise means for authenticating the peripheral communication unit using, at least in part, the decrypted registration identifier. The apparatus may further comprise means for generating, using the decrypted registration identifier, one or more keys for encrypting data messages in subsequent data communications between the apparatus and the peripheral communication unit. The one or more keys may comprise one or more of a master session key, MSK, and one or more derived keys. The apparatus may comprise a central communication unit of the passive optical network, e.g. an optical line terminal, OLT. The peripheral communication unit may be a user-side unit of the passive optical network, e.g. an optical network unit, ONU.

According to a second aspect, there is described an apparatus, comprising: means for providing a public key associated with a central communication unit of a passive optical network; means for encrypting a registration identifier associated with the apparatus using the public key to provide a data message including the encrypted registration identifier; and means for transmitting a data message including the encrypted registration identifier to the central communication unit.

The data message may be transmitted as part of an activation process of the apparatus. The apparatus may further comprise means for receiving the public key over the passive optical network from the central communication unit. The apparatus may further comprise means for generating, using the registration identifier, one or more keys for encrypting data messages in subsequent data communications between the apparatus and the central communication unit. The one or more keys may comprise one or more of a master session key, MSK, and one or more derived keys. The apparatus may comprise a user-side unit of the passive optical network, e.g. an optical network unit, ONU.

According to a third aspect, there is described a method, comprising: receiving, over a passive optical network and from a peripheral communication unit, a data message which includes an encrypted registration identifier associated with the peripheral communication unit and wherein the registration identifier is encrypted using a public key associated with a central communication unit of the passive optical network; and decrypting the data message using a private key associated with the public key to determine the registration identifier associated with the peripheral communication unit.

The data message may be received as part of an activation process of the peripheral communication unit. The method may further comprise transmitting the public key to the peripheral communication unit of the passive optical network. The method may further comprise means for authenticating the peripheral communication unit using, at least in part, the decrypted registration identifier. The method may further comprise means for generating, using the decrypted registration identifier, one or more keys for encrypting data messages in subsequent data communications between a central communication unit of the passive optical network and the peripheral communication unit. The one or more keys may comprise one or more of a master session key, MSK, and one or more derived keys. The method may be performed at a central communication unit of the passive optical network, e.g. an optical line terminal, OLT. The peripheral communication unit may be a user-side unit of the passive optical network, e.g. an optical network unit, ONU.

According to a fourth aspect, there is described a method, comprising: providing a public key associated with a central communication unit of a passive optical network; encrypting a registration identifier associated with the a peripheral communication unit using the public key to provide a data message including the encrypted registration identifier; and transmitting a data message including the encrypted registration identifier to the central communication unit.

The data message may be transmitted as part of an activation process of a peripheral communication unit. The method may further comprise receiving the public key over the passive optical network from the central communication unit. The method may further comprise means for generating, using the registration identifier, one or more keys for encrypting data messages in subsequent data communications between the peripheral communication unit and the central communication unit. The one or more keys may comprise one or more of a master session key, MSK, and one or more derived keys. The method may be performed at a peripheral communication unit of the passive optical network, e.g. an optical network unit, ONU.

According to a fifth aspect, there is described a computer program product comprising a set of instructions which, when executed on an apparatus, is configured to cause the apparatus to carry out the method of any preceding method definition.

According to a sixth aspect, there is described a non-transitory computer readable medium comprising program instructions stored thereon to cause the apparatus to carry out the method of any preceding method definition.

According to a seventh aspect, there is described an apparatus, comprising at least one processor; and at least one memory including computer program code which, when executed by the at least one processor, causes the apparatus to carry out the method of any preceding method definition.

### Drawings

Example embodiments will now be described by way of non-limiting example, with reference to the accompanying drawings, in which:
Figure 1 is a schematic diagram of a passive optical network (PON);
Figure 2 is a schematic diagram of another PON indicating the possibility of a man-in-the-middle attack;
Figure 3 shows the Figure 2 PON adapted according to one or more example embodiments;
Figure 4 is a flow diagram indicating operations according to one or more example embodiments;
Figure 5 is a flow diagram indicating operations according to one or more other example embodiments;
Figure 6 is an apparatus that may be configured to operate according to one or more example embodiments; and
Figure 7 is a non-transitory media that may store computer-readable instructions that may operate according to one or more example embodiments.

### Detailed Description

Example embodiments relate to passive optical networks (PONs) and the communicating of registration identifiers (registration-ids) associated with peripheral communication units of PONs.

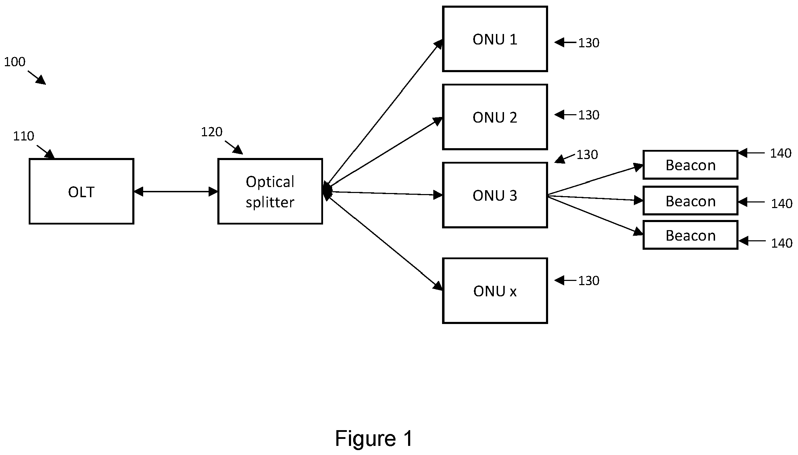

An example PON 100 is shown in Figure 1. It will be seen that there are three distinct types of device in the network: a central communication unit 110, one or more peripheral communication units 130 and an optical splitter 120.

The central communication unit 110 may be an optical line terminal (OLT) and the one or more peripheral communication units 130 may be optical network units (ONUs). This terminology will be used hereinafter.

Operation of the PON 100 may involve communication between the OLT 110 and the one or more ONU's 130 through the optical splitter 120. The optical splitter 120 is configured to multiplex or demultiplex signals based on their origin and destination. For so-called fibre-to-the-home (FTTH) PON networks, the OLT 110 may be located at a service provider's central office. The OLT 100 serves as the point of origination for downstream transmissions coming from, and upstream transmissions going to, the service provider's network. The OLT 100 performs conversion between electrical signals and optical signals. The optical splitter 120 is used to split downstream optical signals into several parts at a certain ratio. The ratio is typically, but not necessarily, symmetric, e.g., a 1:2, 1:4 or 1:8 split with equal power on each of the two, four or eight branches. Asymmetric splitters are also applicable to example embodiments. These optical signals are then sent to individual subscribers. The ONUs 130 terminate the optical signals transmitted via the fibre. The data conveyed over the PON is then further distributed throughout the home. For example, Wi-Fi beacons 140 as shown in Figure 1 can be connected using Ethernet over twisted pair cables to provide connectivity. Alternatively, Wi-Fi transceivers may be integrated with the ONUs 130.

Advantages of PON technology include high bandwidth, long distance and low cost of passive elements and installation.

ONUs 130 are required to be activated by the OLT 110 before communication of user data over the PON 100 can commence. Activation may be required the first time a particular ONU 130 connects to the OLT 100 and/or following any subsequent loss of connection or power that interrupts signaling between particular ONUs and the OLT.

The PON 100 in Figure 1 is merely an example and in other embodiments there may, for example, be zero splitters with only one ONU connected to the OLT 110 or multiple splitters organized in different levels using any suitable topology.

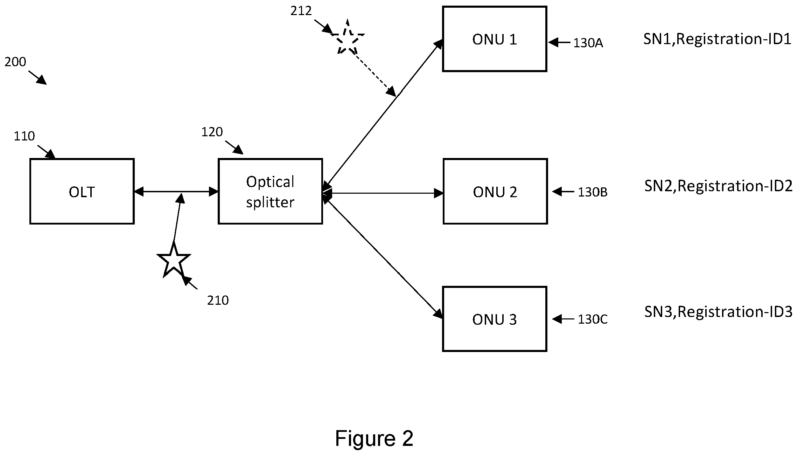

Figure 2 shows another PON 200 comprising the OLT 110, optical splitter 120 and first to third ONUs 130A - 130C. Each of the first to third ONUs 130A - 130C may comprise, e.g. store, a unique serial number (SN1 - SN3) and a registration identifier (registration-ID1 - registration-ID3). As part of a typical activation process, the OLT 110 may transmit discovery messages for detecting the presence of ONUs on the PON 200. In response, and taking the first ONU 130A as an example, said ONU 130A may be configured to transmit its serial number (SN1) to the OLT 110. The OLT 100 may be configured to responsively check that the serial number (SN1) is already allocated or registered to the OLT or service provider before commencing further, although in some situations the activation process may proceed if the serial number is not allocated or registered. The OLT 110 may be configured to responsively open a ranging window for determining the round-trip delay (RTD) between itself and the first ONU 130A to estimate the physical distance in-between which is used to allocate time slots for future upstream communications from the first ONU. The first ONU 130A may be configured to responsively transmit its registration identifier (registration-ID1) to the OLT 110 in an allocated upstream timeslot. The OLT 110 may be configured to responsively authenticate the first ONU 130A based at least in part on the received registration identifier (registration-ID1). As part of the activation process, the OLT 110 may generate one or more keys based on said received registration identifier (registration-ID1) for encrypting and decrypting certain data and performing integrity checks in subsequent communication between the OLT and the first ONU 130A. For example, the OLT 110 may generate a master session key (MSK) based, at least in part, on said registration identifier (registration-ID1) and may generate one or more derived keys based at least in part on the MSK (which derived keys are therefore also based on said registration identifier.) For example, derived keys may include one or more session keys (SKs) generated based, at least in part, on the generated MSK. For example, derived keys may include a key encryption key (KEK) generated based, at least in part, on the one or more SKs. Similarly, derived keys may be integrity checking keys such as an ONU management control interface integrity key (OMCI_IK) and physical layer operation and maintenance integrity key (PLOAM_IK) which may be based, at least in part, on the one or more SKs.

At the particular ONU, in this case the first ONU 130A, the same keys are generated based on the registration identifier (registration-ID1) are generated and hence secure communication between the OLT 110 and the first ONU 130A can take place using known protocols and signaling.

The above summary of a typical activation process has been simplified for ease of understanding and it will be appreciated that variations and alternatives may be used. Reference is made to the ITU-T 10G PON standards (G.987.3, G.9807.1, G.989.3, G9804.2) for further background on PON activation and data security.

An issue can exists in that a third-party with access to a fibre between the OLT 110 and one or more of the first to third ONUs 113A - 113C may obtain one or more of the registration identifiers (registration-ID1 - registration-ID3) and hence can generate the MSK and derived keys and decrypt user data subsequently transmitted. This may be termed a "man-in-the-middle attack" and is represented in Figure 2 by reference numeral 210. Note that a man-in-the-middle attack may also, or alternatively, take place between the optical splitter 120 and any of the one or more of the first to third ONUs 113A- 113C and is represented in Figure 2 by reference numeral 212.

Example embodiments may alleviate or avoid such issues by means of the following apparatuses and methods.

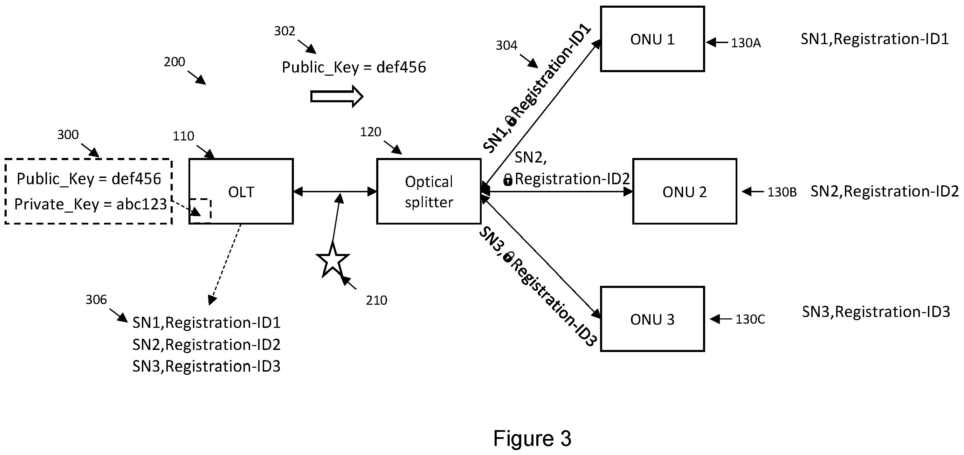

Referring to Figure 3, the OLT 110 may be provided with a public key (Public_Key) and a private key (Private_Key) pairing 300. For example, the pairing 300 may be stored at, or is accessible to, the OLT 100. The private key (Private_Key) may only be stored at, or is only accessible to, the OLT 100. The OLT 100 may transmit (by unicast, multicast or broadcast) only the public key (Public_Key) to one or more of the first to third ONUs 113A - 113C in one or more messages 302. The one or more messages 302 may be accompanied by a certificate to verify that the OLT 100 is the owner of the public key (Public_Key). Alternatively, the first to third ONUs 113A - 113C may be provided with the public key (Public_Key) by some other means, such as a certification entity.

Taking the first ONU 130A as an example, said ONU may receive the message 302 and obtain the public key (Public_Key). The ONU 130A may be configured to encrypt at least its registration identifier (registration-ID1) using the public key. As part of the abovementioned activation process, an encrypted version 304 of the registration identifier (registration-ID1) may be transmitted to the OLT 110 instead of the cleartext version.

At the OLT 110, the encrypted version 304 of the registration identifier is received from the first ONU 130A in an allocated upstream timeslot and may be decrypted using the private key (Private_Key) associated or paired with the public key (Public_Key).

The OLT 110 at this time has access to the decrypted registration identifier (registration-ID1) 306 and can proceed as above, e.g. to generate the MSK and derived keys such as one or more of the SK, KEK, OMCI_IK and PLOAM_IK.

It follows that a man-in-the-middle attack 210 or similar can only obtain the encrypted version 304 of the registration identifier and not the cleartext registration identifier (registration-ID1) without access to the private key (Private_Key) and can therefore not generate the MSK and derived keys needed to access user data.

The same procedure may be used by the OLT 110 for the second and third ONUs 130B, 130C as part of their own activation processes and the use of public and private key pairs may be employed in this manner and in any variation of the above-described activation process or indeed any process where the registration identifier is needed, such as at any subsequent time after the initial request when the OLT 110 requests a registration identifier of a particular ONU. Example embodiments are not therefore limited to the situation occurring at the initial exchange during the activation process.

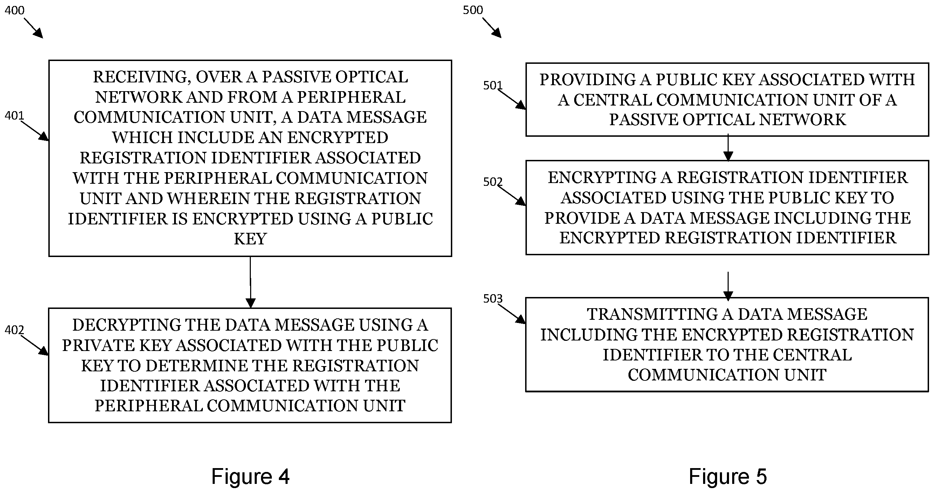

Figure 4 is a flow diagram indicating operations 400 according to one or more example embodiments. The operations may be performed in hardware, software, firmware or a combination thereof. For example, the operations may be performed individually, or collectively, by a means, wherein the means may comprise at least one processor and at least one memory storing instructions that, when executed by the at least one processor, cause the performance of the operations.

The operations may, for example, be performed by a central communication unit, e.g. an OLT, of a PON.

A first operation 401 may comprise receiving, over a passive optical network and from a peripheral communication unit, a data message which includes an encrypted registration identifier associated with the peripheral communication unit and wherein the registration identifier is encrypted using a public key associated with an apparatus, e.g. the receiving apparatus.

A second operation 402 may comprise decrypting the data message using a private key associated with the public key to determine the registration identifier associated with the peripheral communication unit.

In some example embodiments, data messages from a plurality of peripheral communication units may be received, wherein the data messages include respective encrypted registration identifiers associated with said peripheral communication units.

In some example embodiments, the data message may be received as part of an activation process of the peripheral communication unit. Another operation may be performed of transmitting the public key to the peripheral communication unit of the passive optical network. Another operation may comprise authenticating the peripheral communication unit using, at least in part, the decrypted registration identifier. Another operation may comprise generating, using the decrypted registration identifier, one or more keys for encrypting data messages in subsequent data communications between the apparatus and the peripheral communication unit. The one or more keys may comprise one or more of a master session key, MSK, and one or more derived keys. The operations may be performed a central communication unit of the passive optical network, e.g. an optical line terminal, OLT. The peripheral communication unit may be a user-side unit of the passive optical network, e.g. an optical network unit, ONU.

Figure 5 is a flow diagram indicating operations 500 according to one or more other example embodiments. The operations may be performed in hardware, software, firmware or a combination thereof. For example, the operations may be performed individually, or collectively, by a means, wherein the means may comprise at least one processor and at least one memory storing instructions that, when executed by the at least one processor, cause the performance of the operations.

The operations may, for example, be performed by a peripheral communication unit, e.g. an ONU, of a PON.

A first operation 501 may comprise providing a public key associated with a central communication unit of a passive optical network. The term "providing" may encompass receiving, storing and/or accessing.

A second operation 502 may comprise encrypting a registration identifier associated with the apparatus using the public key to provide a data message including the encrypted registration identifier.

A third operation 503 may comprise transmitting a data message including the encrypted registration identifier to the central communication unit.

In some example embodiments, the data message is transmitted as part of an activation process of an apparatus performing the operations. In some example embodiments, the public key may be received over the passive optical network from the central communication unit. The operations may further comprise generating, using the registration identifier, one or more keys for encrypting data messages in subsequent data communications between the apparatus performing the operations and the central communication unit. The one or more keys may comprise one or more of a master session key, MSK, and one or more derived keys. The operations may be performed by a user-side unit of the passive optical network, e.g. an optical network unit, ONU.

### Example Apparatus

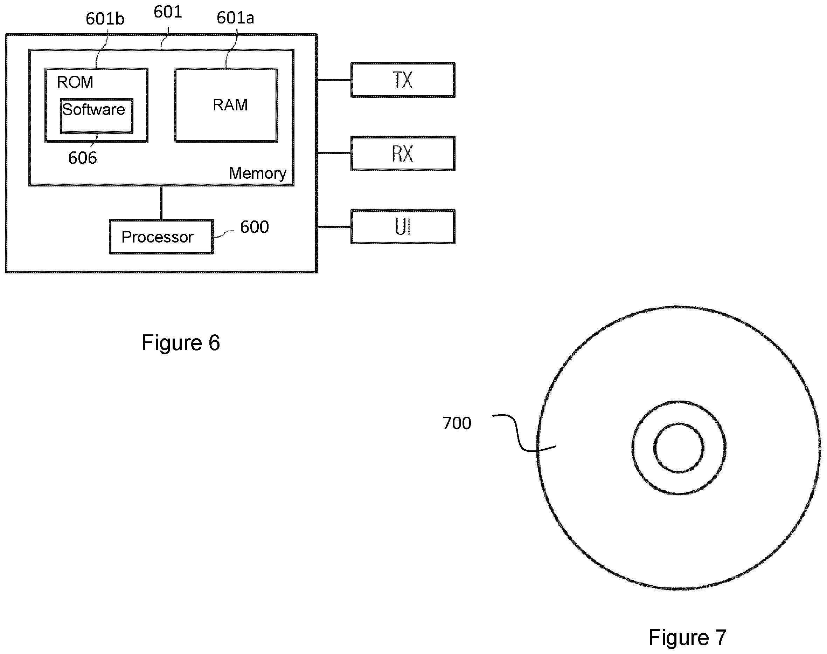

Figure 6 shows an apparatus according to some example embodiments. The apparatus may be configured to perform the operations described herein, for example operations described with reference to any disclosed process. The apparatus comprises at least one processor 600 and at least one memory 601 directly or closely connected to the processor. The memory 601 includes at least one random access memory (RAM) 601a and at least one read-only memory (ROM) 601b. Computer program code (software) 606 is stored in the ROM 601b. The apparatus may be connected to a transmitter (TX) and a receiver (RX). The apparatus may, optionally, be connected with a user interface (UI) for instructing the apparatus and/or for outputting data. The at least one processor 600, with the at least one memory 601 and the computer program code 606 are arranged to cause the apparatus to at least perform at least the method according to any preceding process, for example as disclosed in relation to the flow diagrams of Figures 4 and 5 and related features thereof.

Figure 7 shows a non-transitory media 700 according to some embodiments. The non-transitory media 700 is a computer readable storage medium. It may be e.g. a CD, a DVD, a USB stick, a blue ray disk, etc. The non-transitory media 700 stores computer program instructions, causing an apparatus to perform the method of any preceding process for example as disclosed in relation to the flow diagrams of Figures 4 and 5 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:
means for receiving, over a passive optical network and from a peripheral communication unit, a data message which include an encrypted registration identifier associated with the peripheral communication unit and wherein the registration identifier is encrypted using a public key associated with the apparatus; and
means for decrypting the data message using a private key associated with the public key to determine the registration identifier associated with the peripheral communication unit.

2. The apparatus of claim 1, wherein the data message is received as part of an activation process of the peripheral communication unit.

3. The apparatus of claim 1 or claim 2, further comprising:
means for transmitting the public key to the peripheral communication unit of the passive optical network.

4. The apparatus of any preceding claim, further comprising:
means for authenticating the peripheral communication unit using, at least in part, the decrypted registration identifier.

5. The apparatus of any preceding claim, further comprising:
means for generating, using the decrypted registration identifier, one or more keys for encrypting data messages in subsequent data communications between the apparatus and the peripheral communication unit.

6. The apparatus of claim 5, wherein the one or more keys comprise one or more of a master session key, MSK, and one or more derived keys.

7. The apparatus of any preceding claim, wherein the apparatus is a central communication unit of the passive optical network, e.g. an optical line terminal, OLT.

8. The apparatus of any preceding claim, wherein the peripheral communication unit is a user-side unit of the passive optical network, e.g. an optical network unit, ONU.

9. An apparatus, comprising:
means for providing a public key associated with a central communication unit of a passive optical network;
means for encrypting a registration identifier associated with the apparatus using the public key to provide a data message including the encrypted registration identifier; and
means for transmitting a data message including the encrypted registration identifier to the central communication unit.

10. The apparatus of claim 9, wherein the data message is transmitted as part of an activation process of the apparatus.

11. The apparatus of claim 9 or claim 10, further comprising:
means for receiving the public key over the passive optical network from the central communication unit.

12. The apparatus of any of claims 9 to 11, further comprising:
means for generating, using the registration identifier, one or more keys for encrypting data messages in subsequent data communications between the apparatus and the central communication unit, and optionally wherein the one or more keys comprise one or more of a master session key, MSK, and one or more derived keys.

13. Wherein the apparatus is a peripheral communication unit of the passive optical network, e.g. an optical network unit, ONU.

14. A method, comprising:
receiving, over a passive optical network and from a peripheral communication unit, a data message which include an encrypted registration identifier associated with the peripheral communication unit and wherein the registration identifier is encrypted using a public key associated with a central communication unit of the passive optical network; and
decrypting the data message using a private key associated with the public key to determine the registration identifier associated with the peripheral communication unit.

15. A method, comprising:
providing a public key associated with a central communication unit of a passive optical network;
encrypting a registration identifier associated with a peripheral communication unit using the public key to provide a data message including the encrypted registration identifier; and
transmitting a data message including the encrypted registration identifier to the central communication unit.
